# EUROPEAN PATENT SPECIFICATION

(11) **EP 1 487 227 B1**
(45) Date of publication and mention of the grant of the patent: **11.01.2006**
(21) Application number: 04253182.2
(22) Date of filing: 28.05.2004
(51) Int. Cl.: H04Q 7/36

(54) **Method for increasing wireless communication system capacity**
Verfahren zur Erhöhung der Kapazität in einem drahtlosen Kommunikationssystem
Procédé pour augmenter la capacité d'un système de communication sans fil

(30) Priority: 11.06.2003 US 459634
(43) Date of publication of application: 15.12.2004
(73) Proprietor: LUCENT TECHNOLOGIES INC., Murray Hill, New Jersey 07974-0636 (US)
(72) Inventor: Clark, Andrew C., Succasunna, NJ 07876 (US); Kraml, Mark H., Flanders, NJ 07836 (US); Nardozza, Greg, Glenwood, NJ 07418 (US)
(74) Representative: Watts, Christopher Malcolm Kelway

(56) References cited:
- EP-A- 1 026 911
- WO-A-03/041293
- US-A1- 2002 146 029
- US-A1- 2003 090 418
- HUANG H ET AL: "Spectral efficiency of CDMA systems with transmit and receive antenna arrays" IEEE, vol. 1, 23 September 2000 (2000-09-23), pages 46-50, XP010532465

## Description

### Background of the Invention

### Field of the Invention

The present invention is related to wireless communication systems.

### Description of the Related Art

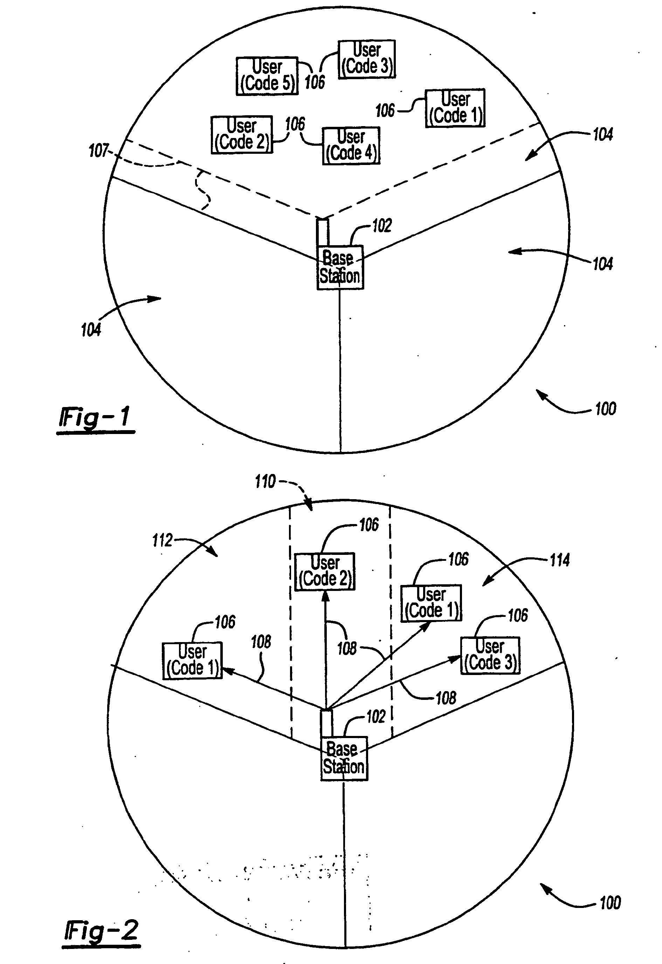

Wireless communication systems rely on data sharing arrangements to allow multiple users to share common resources. As shown in Figure 1, the wireless system 100 has a base station 102 acting as a communications hub for each particular coverage area, or sector 104.

Mobile devices associated with users 106 within a given sector 104 share common resources. Base station 102 may employ a resource assignment algorithm to ensure that the resources are fairly distributed among the users 106. As is known in the art, CDMA assigns multiple users 106 to transmit and receive data on the same frequency in a given sector 104. To distinguish among different users 106 in the sector 104, Walsh coding or other orthogonal coding schemes are used in the forward link (from the base station 102 to each user 106) to code the data from each individual user 106, distinguishing the data for each user. As shown in Figure 1, the base station 102 transmits a broad beam 107 received by multiple users 106 in the sector 104, requiring multiple codes (indicated as Code 1, Code 2, etc. in this example for purposes of illustration).

The capacity of currently-known wireless systems are limited by the number of available Walsh codes set by wireless standards. Although it is possible to increase the capacity of CDMA signal carriers, the number of available Walsh codes is still fixed. Thus, even though the system may have the ability to support an increased number of users, the number of available Walsh codes set by the standard prevents the system from taking advantage of the additional capacity.

Some techniques for increasing the capacity of a system are shown in US-A-2002/0146029 and EP-A-1026911. In the published U.S. application, for example, it is proposed to reuse Walsh codes within a sector such that more than one user uses the same Walsh code.

There is a desire for a method that overcomes the limitations of a fixed number of available Walsh codes to take advantage of the increased user capacity in a wireless system provided by steered beams.

### Summary of the Invention

A method according to the invention is as set out in claim 1. Preferred forms are set out in the dependent claims.

The present invention is directed to a method of increasing a number of possible users in a wireless communication system. The method comprises directing steered beams to users within a sector of the system so that each user receives data via its own unique steered beam from a base station. The steered beams prevent more than one user from receiving data carried on the same beam.

If the steered beams for at least two users are far enough apart so they do not interfere with each other, the base station assigns the two users the same code, such as the same Walsh code, for coding and decoding purposes. Thus, the invention allows the base station to assign the same code to more than one user in a given sector, overcoming the limitations imposed by the fixed number of available codes set by wireless standards. As a result, the invention increases the capacity of a wireless system by making it possible to accommodate more users than previously-known systems relying on a one-to-one correspondence between the number of available codes and the number of users that a sector can accommodate.

### Brief Description of the Drawings

Figure 1 is a representative diagram illustrating one embodiment of a wireless system operating environment; and
Figure 2 is a representative diagram illustrating a method according to one embodiment of the invention.

### Detailed Description

The examples described below focus on a wireless system using a steered beam system to improve capacity; however, the inventive method can be incorporated in any system to increase the number of users that the system can support and to take advantage of increased system capacity.

As is known in the art, conventional antennas in a wireless system send signals over a broad beam, covering a large number of users 106 over a wide area. Steered beam systems use a more focused, narrow beam to reach an individual user 106 at any given time on a per user basis. Thus, instead of sending data via a broad beam that can be received by many or all of the users in the sector 104, the base station 102 in a steered beam system focuses a unique narrow beam on an individual user 106 when sending data corresponding to that user 106. In other words, the base station 102 forms and transmits beams on a per-user basis.

Figure 2 is a representative diagram illustrating multiple users 106 in a sector 104. For clarity, the users 106 are shown in only one sector 104, but each sector 104 can contain any number of users 106. Each user 106 receives a focused narrow beam 108 from the base station 102 to receive data. As shown in Figure 2, the sector 104 can be divided into two or more subsections. In this example, a center subsection 110 separates left and right subsections 112, 114, but the subsections can have any shape, size and configuration.

Because the users 106 in the left and right subsections 112, 114 are separated far enough from each other within the sector 104, the individual users 106 in different subsections 112, 114 can use the same Walsh code. In the illustrated example, one user 106 in the left subsection 112 has the same code (i.e., Code 1 in this example) as another user in the right subsection 114. In other words, focusing individual beams on specific users 106, rather than using a broad antenna beam, allows the base station 102 to assign the same Walsh code to users 106 in different subsections 112, 114 because the beams for the users 106 are far enough apart to not interfere with each other.

If there are two users 106 that are initially located in different subsections 112, 114 but are moving closer together, the users 106 may end up at a distance close enough to cause interference between their respective focused beams 108. Interference between two or more users having the same assigned Walsh code may cause one user 106 to accidentally receive and decode data meant for another user 106. To avoid this, a Walsh code handoff may be conducted for one of the users 106 to change its assigned Walsh code and avoid potential interference between two or more users 106 having the same Walsh code.

For illustrative purposes only, Figure 2 illustrates a subsection 110 where none of the users 106 in that subsection 110 can use the same Walsh code as users 106 in the other subsections 112, 114 because the users 106 are too close together. Similarly, if a user 106 moves into a subsection having another user 106 using the same Walsh code, the Walsh code of one of the users 106 should be changed to avoid interference. The specific method of detecting user proximity and determining whether to change the Walsh code of one user can be conducted via any known process.

Thus, the invention enables codes, such as Walsh codes, to be reused within the same sector 104 provided that the users 106 are far enough apart (e.g., located in different subsections 112, 114) that the focused beams 108 to the respective users 106 do not interfere with each other. The invention allows an increased number of users 106 to occupy a given sector without any changes to any wireless standards. Instead, the invention can be implemented by combining the advantages of steered beam systems and reuse of Walsh codes to overcome the limitations on the number of Walsh codes set forth in the wireless standards. The invention can be used in any wireless application, including military applications that use radar or sonar to transmit data, as well as conventional consumer applications.

While the particular invention has been described with reference to illustrative embodiments, this description is not meant to be construed in a limiting sense. It is understood that although the present invention has been described, various modifications of the illustrative embodiments, as well as additional embodiments of the invention, will be apparent to one of ordinary skill in the art upon reference to this description without departing from the scope of the invention, as recited in the claims appended hereto. Consequently, this method, system and portions thereof and of the described method and system may be implemented in different locations, such as network elements, the wireless unit, the base station, a base station controller, a mobile switching center and/or radar system. Moreover, processing circuitry required to implement and use the described system may be implemented in application specific integrated circuits, software-driven processing circuitry, firmware, programmable logic devices, hardware, discrete components or arrangements of the above components as would be understood by one of ordinary skill in the art with the benefit of this disclosure. Those skilled in the art will readily recognize that these and various other modifications, arrangements and methods can be made to the present invention without strictly following the exemplary applications illustrated and described herein and without departing from the scope of the present invention. It is therefore contemplated that the appended claims will cover any such modifications or embodiments as fall within the scope of the invention.

## Claims

1. A method of transmitting data in a wireless communication system, comprising:
transmitting data to a first user (106) in a sector (104) with a code (Codel); and
transmitting data to a second user (106) in the sector (104) with the code (Code 1) such that the first (106) and the second user (106) use the same code (Code 1), simultaneously;
**characterized by**
determining relative positions of the first and second users and assigning a second, different code (Code 3) to at least one of the first or second users (106) if the relative positions become close enough to introduce possible interference between beams (108) used for transmitting to the first and second users (106), respectively.

2. The method of claim 1, comprising transmitting (108) to the first user (106) via a first steered beam (108) directed to only the first user (106) and to the second user (106) via a second steered beam (108) directed to only the second user (106).

3. The method of claim 1, further **characterized by** changing the code associated with the second user (106) if the determined relative positions correspond to a distance between the first and second users (106) that is below a predetermined amount.

4. The method of claim 1, wherein the code is a Walsh code.

5. The method of claim 1, further **characterized by** determining a subsection (110) of the sector (104) in which a user (106) will have a relative position relative to another user (106) anywhere else (112, 114) in the sector (104) to cause the possible interference.

6. The method of claim 5, further **characterized by** preventing any user (106) in the determined subsection (110) from using a code used by another user (106) in the sector (104).

## Patentansprüche

1. Verfahren zum Übertragen von Daten in einem drahtlosen Kommunikationssystem, mit folgenden Schritten:
Übertragen von Daten zu einem ersten Benutzer (106) in einem Sektor (104) mit einem Code (Code 1); und
Übertragen von Daten zu einem zweiten Benutzer (106) in dem Sektor (104) mit dem Code (Code 1), so daß der erste (106) und der zweite Benutzer (106) gleichzeitig den gleichen Code (Code 1) benutzen;
**gekennzeichnet durch**
Bestimmen von relativen Positionen des ersten und zweiten Benutzers und Zuweisen eines zweiten unterschiedlichen Codes (Code 3) zu mindestens einem des ersten oder zweiten Benutzers (106), wenn die relativen Positionen nahe genug werden, um mögliche Interferenz zwischen zum Übertragen zu dem ersten bzw. zweiten Benutzer (106) benutzten Strahlen (108) einzuführen.

2. Verfahren nach Anspruch 1 mit Übertragen (108) zum ersten Benutzer (106) über einen ersten, nur zum ersten Benutzer (106) gerichteten gesteuerten Strahl (108) und zum zweiten Benutzer (106) über einen zweiten nur zum zweiten Benutzer (106) gerichteten gesteuerten Strahl (108).

3. Verfahren nach Anspruch 1, weiterhin **gekennzeichnet durch** Ändern des dem zweiten Benutzer (106) zugeordneten Codes, wenn die bestimmten relativen Positionen einem Abstand zwischen dem ersten und zweiten Benutzer (106) entsprechen, der unter einem vorbestimmten Betrag liegt.

4. Verfahren nach Anspruch 1, wobei der Code ein Walsh-Code ist.

5. Verfahren nach Anspruch 1, weiterhin **gekennzeichnet durch** Bestimmen eines Teilabschnitts (110) des Sektors (104), in dem ein Benutzer (106) eine relative Position bezüglich eines anderen Benutzers (106) irgendwo anders (112, 114) im Sektor (104) aufweist, um die mögliche Interferenz zu verursachen.

6. Verfahren nach Anspruch 5, weiterhin **gekennzeichnet durch** Verhindern, daß irgendein Benutzer (106) in dem vorbestimmten Teilabschnitt (110) einen von einem anderen Benutzer (106) im Sektor (104) benutzten Code benutzt.

## Revendications

1. Procédé de transmission de données dans un système de communication sans fil, comprenant :
une transmission de données à un premier utilisateur (106) dans un secteur (104) avec un code (code 1) ; et
une transmission de données à un deuxième utilisateur (106) dans le secteur (104) avec le code (code 1) de telle sorte que le premier (106) et le deuxième utilisateur (106) utilisent le même code (code 1), simultanément ;
**caractérisé par**
une détermination de positions relatives des premier et deuxième utilisateurs et une attribution d'un deuxième code différent (code 3) à au moins un des premier ou deuxième utilisateurs (106) si les positions relatives deviennent suffisamment proches pour introduire une interférence possible entre des faisceaux (108) utilisés pour transmettre vers le premier et deuxième utilisateurs (106), respectivement.

2. Procédé selon la revendication 1, comprenant une transmission (108) vers le premier utilisateur (106) par l'intermédiaire d'un premier faisceau orienté (108) dirigé seulement sur le premier utilisateur (106) et sur le deuxième utilisateur (106) par l'intermédiaire d'un deuxième faisceau orienté (108) dirigé seulement sur le deuxième utilisateur (106).

3. Procédé selon la revendication 1, **caractérisé en outre par** un changement du code associé au deuxième utilisateur (106) si les positions relatives déterminées correspondent à une distance comprise entre les premier et deuxième utilisateurs (106) qui est en dessous d'une quantité prédéterminée.

4. Procédé selon la revendication 1, dans lequel le code est un code de Walsh.

5. Procédé selon la revendication 1, **caractérisé en outre par** une détermination d'une sous-section (110) du secteur (104) dans laquelle un utilisateur (106) aura une position relative par rapport à un autre utilisateur (106) partout ailleurs (112, 114) dans le secteur (104) pour causer l'interférence possible.

6. Procédé selon la revendication 5, **caractérisé en outre par** un empêchement de tout utilisateur (106) dans la sous-section déterminée (110) d'utiliser un code utilisé par un autre utilisateur (106) dans le secteur (104).
